# EUROPÄISCHE PATENTANMELDUNG

(11) **EP 1 808 572 A1**
(43) Veröffentlichungstag der Anmeldung: **18.07.2007**
(21) Anmeldenummer: 06000850.5
(22) Anmeldetag: 16.01.2006
(51) Int. Cl.: F01D 5/00, B23P 6/00, B23P 6/04, C23C 10/02

(54) **Schweissverfahren mit anschliessender Diffusionbehandlung**

(71) Anmelder: SIEMENS AKTIENGESELLSCHAFT, 80333 München (DE)
(72) Erfinder: Birkner, Jens, 45481 Mülheim an der Ruhr (DE); Esser, Winfried, Dr., 44805 Bochum (DE)

(57) **Zusammenfassung**

Bekannte Schweißzusatzwerkstoffe lassen sich entweder gut schweißen und weisen keine guten mechanischen Eigenschaften insbesondere bei hohen Temperaturen auf oder lassen sich schlecht schweißen und weisen eine hohe Festigkeit auf.

Das erfindungsgemäße Schweißverfahren sieht vor, einen gut schweißbaren Zusatzwerkstoff (13) zu verwenden und in einer anschließenden Diffusionsbehandlung ein metallisches Element (Me) hineindiffundieren zu lassen, so dass die geänderte Zusammensetzung (13') bessere mechanische Eigenschaften aufweist als ohne die Eindiffundierung des metallischen Elements (Me).

## Beschreibung

Die Erfindung betrifft ein Schweißverfahren mit anschließender Diffusionsbehandlung gemäß Anspruch 1.

Bauteile müssen manchmal nach der Herstellung, beispielsweise nach dem Gießen oder nachdem sie im Einsatz waren und Risse gebildet haben, repariert werden.
Hierzu gibt es verschiedene Reparaturverfahren wie z. B. das Schweißverfahren.

Insbesondere bei der Reparatur von nickelbasierten Superlegierungen, die aufgrund ihres γ'-Anteils bei hohen Temperaturen gute Eigenschaften aufweisen, will man ein artgleiches Material als Schweißzusatzwerkstoff verwenden. Jedoch führen die guten Hochtemperatureigenschaften der nickelbasierten Superlegierungen bei der Verwendung als Schweißzusatzwerkstoff dazu, dass sie sich schlecht schweißen lassen, so dass es zur Heißrissbildung kommen kann.

Die Verwendung von anderen Schweißzusatzwerkstoffen, die nicht die gleiche oder nicht die artgleiche Zusammensetzung wie das Substrat einer nickelbasierten Superlegierung aufweisen, führt dann beim Einsatz des Bauteils mit der reparierten Stelle schlechtere mechanische Eigenschaften auf.

Das Problem besteht bei vielen metallischen Legierungen.

Es ist daher Aufgabe der Erfindung ein Schweißverfahren aufzuzeigen, das das oben genannte Problem überwindet.

Die Aufgabe wird gelöst durch ein Schweißverfahren gemäß Anspruch 1.
In den Unteransprüchen sind weitere vorteilhafte Maßnahmen aufgelistet, die beliebig in vorteilhafter Art und Weise miteinander kombiniert werden können.

Das Verfahren sieht vor, dass zuerst ein Schweißzusatzwerkstoff verwendet wird, der für die spätere Anwendung nicht die optimalen mechanischen und thermischen Eigenschaften aufweist, aber durch Einbringung eines metallischen Elementes in einem separaten Diffusionsprozess in seiner Materialzusammensetzung so eingestellt wird, dass die mechanischen und thermischen Eigenschaften ausreichend für den späteren Einsatz sind.

Es zeigen:
- Figur 1, 2: schematisch den Ablauf des erfindungsgemäßen Schweißverfahrens,
- Figur 3: eine Liste von Superlegierungen,
- Figur 4: eine perspektivische Ansicht einer Turbinenschaufel,
- Figur 5: eine perspektivische Ansicht einer Brennkammer und
- Figur 6: eine Gasturbine.

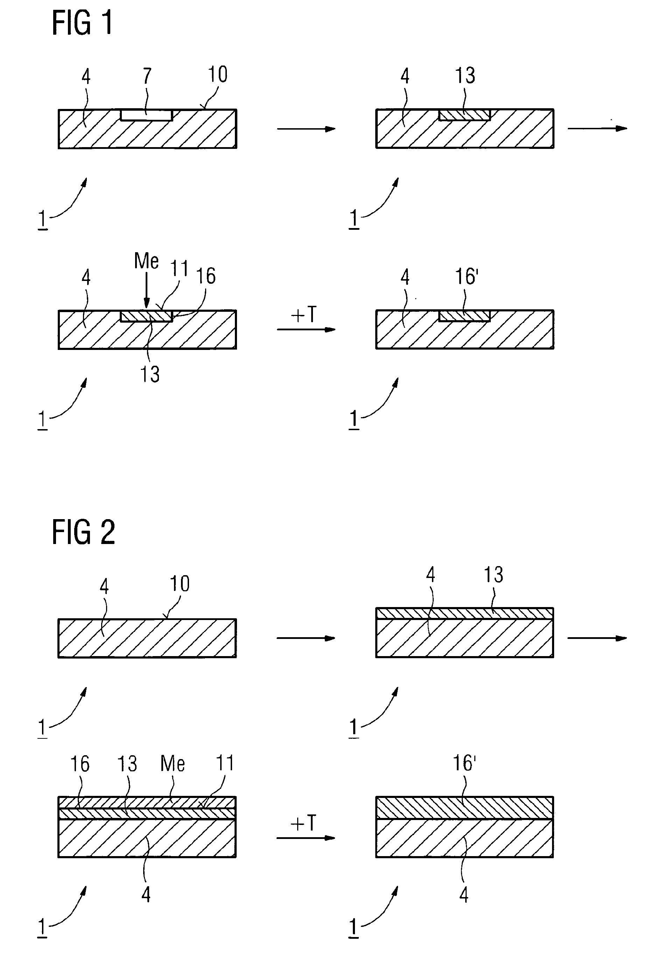

Figur 1 zeigt schematisch den Ablauf des erfindungsgemäßen Verfahrens.

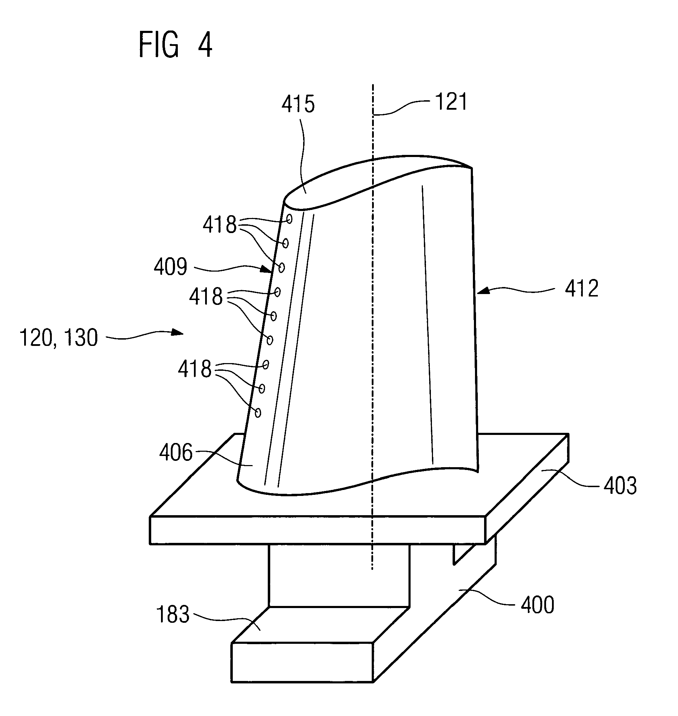

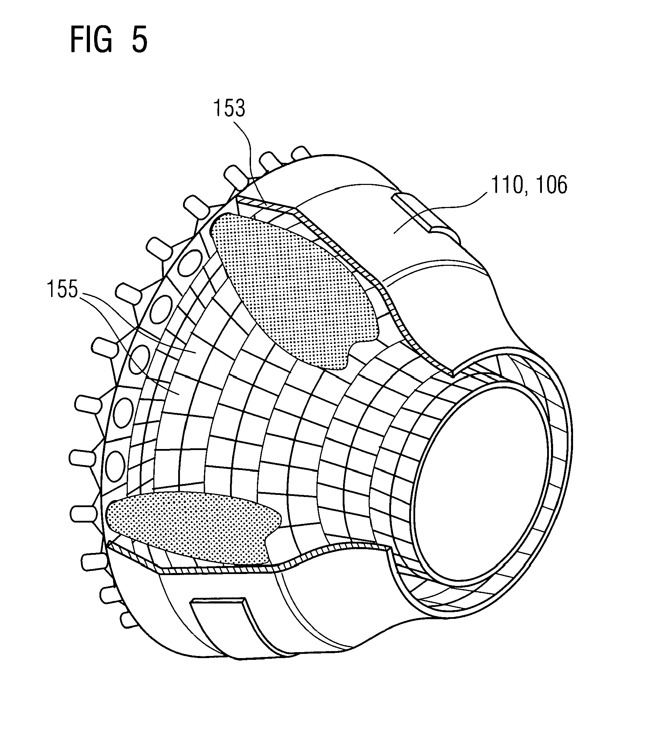

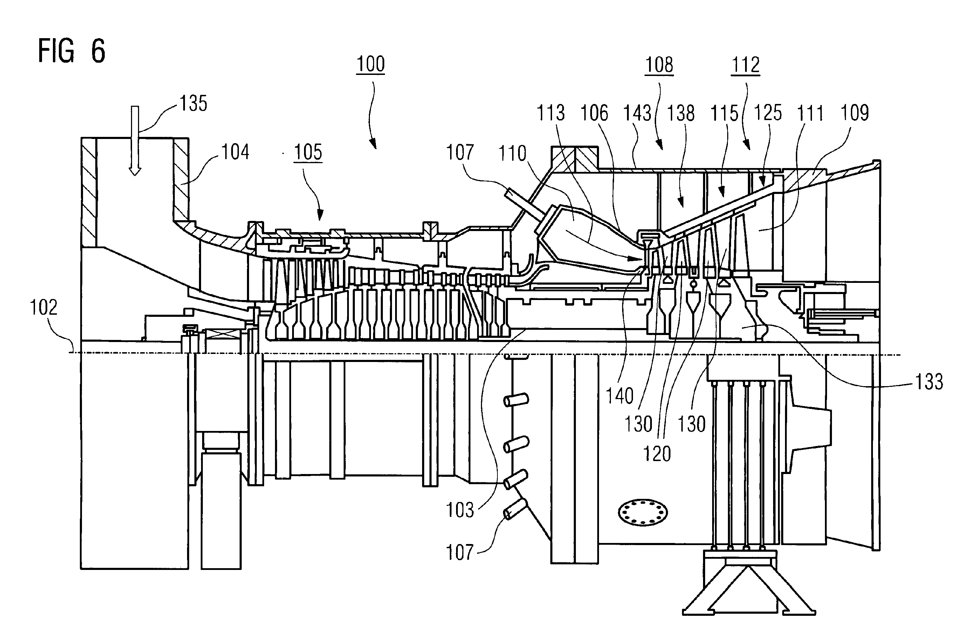

Das Bauteil 1, insbesondere ein Bauteil für Dampf- oder Gasturbinen 100 (Figur 6), insbesondere eine Turbinenschaufel 120, 130 (Figur 4) oder ein Brennkammerelement 155 (Figur 5) besteht vorzugsweise aus einer Superlegierung, die bei den Hochtemperaturanwendungen aus einer nickel- oder kobaltbasierten Superlegierung besteht, die dann das Material für ein Substrat 4 des Bauteils 1 bilden.

Das Substrat 4 weist eine Oberfläche 10 auf, bei der ein Auftragsschweißen zur Bauteilverdickung durchgeführt werden soll (Fig. 2) oder besitzt eine Vertiefung 7 (Fig. 1), beispielsweise ein Riss, der verschweißt werden soll, wobei jeweils ein Schweißzusatzwerkstoff 13 verwendet wird.

Im Folgenden wird das Verfahren für die Vertiefung 7 beispielhaft erläutert.
Dabei wird nach einem bekannten Verfahren aus dem Stand der Technik ein gut schweißbarer Schweißzusatzwerkstoff 13 in die Vertiefung 7 eingeführt und mit dem Substrat 4 verschweißt, so dass die Vertiefung 7 aufgefüllt ist und ein geschweißter Bereich 16 ohne Rissbildung oder sonstige Fehler entsteht. Der Schweißzusatzwerkstoff 13 hat nicht die Zusammensetzung des Substrats 4.

Der verwendete Schweißzusatzwerkstoff 13 des erfindungsgemäßen Verfahrens lässt sich gut verschweißen, weist jedoch bei den Einsatztemperaturen und/oder Einsatzbedingungen des Bauteils 1, 120, 130, 155 nicht die gleichen bzw. deutlich erkennbar schwächere mechanische Eigenschaften auf wie das Material des Substrats 4.

Der Schweißzusatzwerkstoff 13 kann in Form eines Pulvers in dem Bereich 7 zugeführt werden und aufgeschmolzen werden oder es wird beim Schweißen eine Elektrode verwendet, die die Zusammensetzung des Schweißzusatzwerkstoffes 13 aufweist. Weitere Schweißverfahren sind denkbar.

Um diesen Nachteil zu überwinden, lässt man erfindungsgemäß zumindest ein Metall (Me) von einer äußeren Oberfläche 11 des geschweißten Bereichs 16 in den geschweißten Bereich 16 eindiffundieren. Vorzugsweise lässt man nur ein metallisches Element Me in den geschweißten Bereich 16 eindiffundieren.
Dies kann durch CVD-, PVD-Verfahren (Fig. 1) oder durch Beschichtungsverfahren erfolgen, bei denen das Metall Me als Ion, Atom dem geschweißten Bereich zugeführt. Eine großflächige Auftragung kann (Fig. 2) durch Schlickerverfahren, Plasmaspritzen, usw. erfolgen.
Andere Beschichtungsmethoden sind denkbar.
Auch für die lokale Diffusion (Fig. 1) kann das Schlickerverfahren (ggf. sogar ohne Maskierung) oder das Plasmaspritzen mit Maskierung verwendet werden.

Das eine oder zumindest eine Metall Me ist insbesondere ein Legierungselement des Substrats 4.
Insbesondere bei nickelbasierten Substraten 4 wird hier der geschweißte Bereich 16 alitiert, d.h. Aluminium diffundiert in den geschweißten Bereich 16 hinein. Dadurch wird der Anteil der γ'-Phase, der in dem geschweißten Bereich 16 entstehen kann, durch den höheren Aluminiumgehalt erhöht, was die mechanischen Eigenschaften, insbesondere die Festigkeit bei hohen Temperaturen wegen der geänderten Zusammensetzung 13' deutlich erhöht. Der geschweißte Bereich 16 ohne das zusätzliche Aluminium kann nur einen geringeren Anteil der γ'-Phase bilden und hätte geringere mechanische Festigkeiten zur Folge. Jedoch weist diese Zusammensetzung vor der Alitierung gerade wegen der geringen Bildungsmöglichkeit der γ'-Phase eine bessere Schweißbarkeit auf.
Ebenso kann Titan alleine oder Titan und Aluminium in dem geschweißten Bereich eindiffundieren gelassen werden, da auch Titan ein γ'-Bildner ist.
Ebenso können weitere Bestandteile in den geschweißten Bereich hineindiffundiert gelassen werden, wie z.B. Chrom. Ebenso ist es möglich Aluminium und Chrom in einen nickelbasierten Schweißzusatzwerkstoff hineindiffundieren zu lassen. Dies kann nacheinander oder gleichzeitig erfolgen.

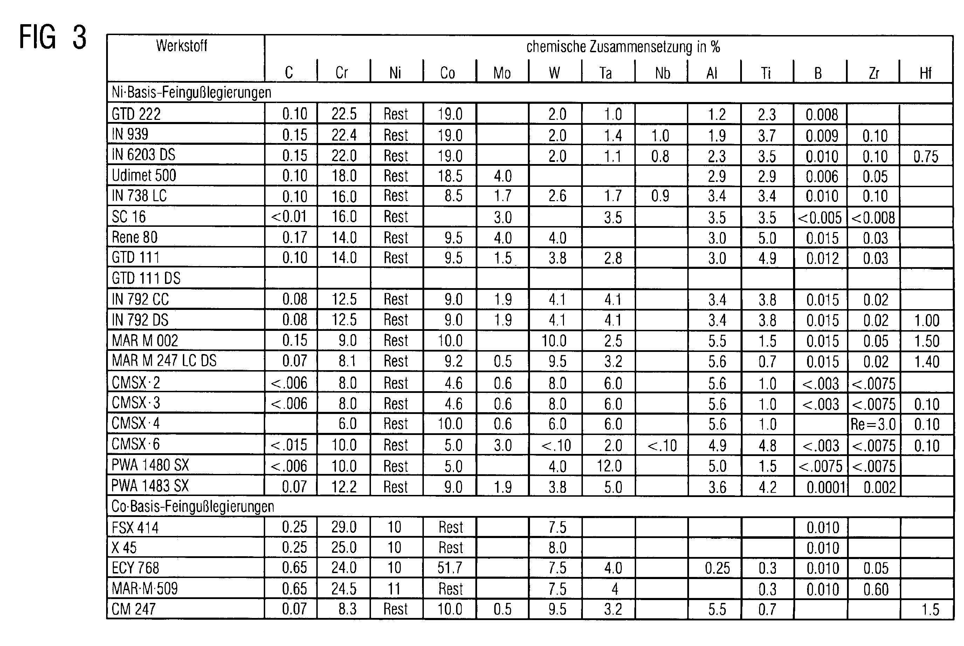

Nach der Eindiffusion des Metalls Me weist der geänderte geschweißte Bereich 16' vorzugsweise die gleiche Zusammensetzung wie das Substrat 4 (Zusammensetzungen siehe Fig. 3) auf. Geringe Unterschiede zwischen Substrat 4 und dem Bereich 16' im Gehalt des bzw. der zudiffundierten Metalls Me bzw. der Metalle Me sind möglich.
Bei dem diffusionsbehandelten geschweißten Bereich 16' kann sich in gewünschter Weise ein hoher Anteil der γ'-Phase bilden.
Der Anteil der γ'-Phase im diffusionsbehandelten geschweißten Bereich 16' entspricht ± 10% dem Anteil der *γ*'-Phase des Substrats 4.

Nach der Diffusionsbehandlung kann vorzugsweise eine Lösungsglühbehandlung oder eine Auslagerungsbehandlung nach dem Stand der Technik erfolgen.

Als Substrat 4 wird vorzugsweise Rene 80, IN 738 LC oder IN 939 verwendet.

Der verwendete Schweißzusatzwerkstoff 13 hat dann in der Regel gegenüber einen reduzierten Aluminiumgehalt.
Ebenso kann der Werkstoff IN 625 (eine Ni-Cr-Legierung ohne γ'-Bildner) als Schweißzusatzwerkstoff verwendet werden, wobei zu diesem Werkstoff dann γ'-Bildner hinzugefügt werden. IN 625 hat folgende Zusammensetzung (wird von Haynes High Temperature Alloys geliefert): (in wt%) Kobalt max. 1%, Eisen max. 5%, Chrom 21%, Molybdän 9%, Hafnium + Tantal (3,7%), Mangan 0,5%, Silizium max. 0,5%, Aluminium max. 0,4%, Titan max. 0,4%, Kohlenstoff max. 0,1%, Rest Nickel.

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt oder z.B. atmosphärisches Plasmaspritzen (APS) poröse, mikro- und makrorissbehaftete Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 mit dem erfindungsgemäßen Verfahren repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine 100 (Fig. 6).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 mit dem erfindungsgemäßen Verfahren repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schweißverfahren,
bei dem eine Oberfläche (10) eines Substrats (4), insbesondere eine Vertiefung (7) im Substrat (4),
mit einem Schweißzusatzwerkstoff (13) versehen und ein geschweißter Bereich (16) erzeugt wird,
**dadurch gekennzeichnet, dass**
der geschweißte Bereich (16) einer Diffusionsbehandlung unterzogen wird,
bei dem zumindest ein metallisches Element (Me) von einer Oberfläche des geschweißten Bereichs (16) in den geschweißten Bereich (16) hinein diffundiert.

2. Verfahren nach Anspruch 1,
**dadurch gekennzeichnet, dass**
eine Superlegierung als Substrat (4) angeschweißt wird.

3. Verfahren nach Anspruch 1 oder 2,
**dadurch gekennzeichnet, dass**
ein nickelbasiertes Substrat (4) geschweißt wird.

4. Verfahren nach Anspruch 1, 2 oder 3,
**dadurch gekennzeichnet, dass**
ein nickelbasierter Schweißzusatzwerkstoff (13) verwendet wird.

5. Verfahren nach Anspruch 1, 2, 3 oder 4,
**dadurch gekennzeichnet, dass**
nur ein metallisches Element (Me) bei der Diffusion in den geschweißten Bereich (10) verwendet wird.

6. Verfahren nach Anspruch 1, 2, 3, 4 oder 5,
**dadurch gekennzeichnet, dass**
ein metallisches Element (Me) des Substrats (4) bei der Diffusion verwendet wird.

7. Verfahren nach Anspruch 1, 2, 3 4, 5 oder 6,
**dadurch gekennzeichnet, dass**
Aluminium in den geschweißten Bereich (16) hinein diffundiert.

8. Verfahren nach Anspruch 1, 2, 3, 4, 5, 6 oder 7,
**dadurch gekennzeichnet, dass**
Chrom in den geschweißten Bereich (16) hinein diffundiert.

9. Verfahren nach einem oder mehreren der Ansprüche 1 bis 8,
**dadurch gekennzeichnet, dass**
zwei metallische Elemente bei der Diffusion in dem geschweißten Bereich (16) verwendet werden.

10. Verfahren nach Anspruch 3, 4, 5, 6, 7, 8 oder 9,
**dadurch gekennzeichnet, dass**
nach dem Eindiffundieren des Metalls (Me) der geschweißte Bereich (16') die Zusammensetzung des Substrats (4) aufweist.

11. Verfahren nach Anspruch 6, 7, 8, 9 oder 10,
**dadurch gekennzeichnet, dass**
die Metalle des Substrats (4) in den geschweißten Bereich (16) hineindiffundiert werden,
die im Schweißzusatzwerkstoff (13) Abweichungen zum Substrat (4) aufweisen.

12. Verfahren nach Anspruch 2, 3, 6, 10 oder 11,
**dadurch gekennzeichnet, dass**
Rene 80 als Substrat (4) verwendet wird.

13. Verfahren nach Anspruch 2, 3, 6, 10 oder 11,
**dadurch gekennzeichnet, dass**
IN 738 LC als Substrat (4) verwendet wird.

14. Verfahren nach Anspruch 2, 3, 6, 10 oder 11,
**dadurch gekennzeichnet, dass**
IN 939 als Substrat (4) verwendet wird.

15. Verfahren nach Anspruch 4, 5, 7, 12, 13 oder 14,
**dadurch gekennzeichnet, dass**
der Anteil von Aluminium in Rene 80, IN 738 LC oder IN 939 reduziert wird und als Schweißzusatzwerkstoff (13) verwendet wird.

16. Verfahren nach Anspruch 1, 4, 5, 7, 8, 9, 10 oder 11,
**dadurch gekennzeichnet, dass**
IN 625 als Schweißzusatzwerkstoff (13) verwendet wird.

17. Verfahren nach einem oder mehreren der vorherigen Ansprüche,
**dadurch gekennzeichnet, dass**
eine Lösungsglühung nach der Diffusionsbehandlung erfolgt.

18. Verfahren nach einem oder mehreren der vorherigen Ansprüche,
**dadurch gekennzeichnet, dass**
eine Auslagerungsbehandlung nach der Diffusionsbehandlung erfolgt.

19. Verfahren nach Anspruch 1, 4, 17 oder 18,
**dadurch gekennzeichnet, dass**
der Anteil der γ'-Phase des diffusionsbehandelten geschweißten Bereichs (16') ± 10% dem Anteil der γ'-Phase des Substrats (4) entspricht.
